# EUROPEAN PATENT SPECIFICATION

(11) **EP 0 875 670 B1**
(45) Date of publication and mention of the grant of the patent: **26.02.2003**
(21) Application number: 98107968.4
(22) Date of filing: 30.04.1998
(51) Int. Cl.: F02B 23/10

(54) **Direct injection type internal combustion engine**
Brennkraftmaschine mit Direkteinspritzung
Moteur à combustion avec injection directe de carburant

(30) Priority: 30.04.1997 JP 12808997
(43) Date of publication of application: 04.11.1998
(73) Proprietor: YAMAHA HATSUDOKI KABUSHIKI KAISHA, Iwata-shi Shizuoka-ken, 438 (JP)
(72) Inventor: Suzuki, Yuichi, Iwata-Shi, Shizuoka-ken (JP); Tanaka, Daijiro, Iwata-Shi, Shizuoka-ken (JP); Uchiyama, Uichitake, Iwata-Shi, Shizuoka-ken (JP)
(74) Representative: Grünecker, Kinkeldey, Stockmair & Schwanhäusser Anwaltssozietät

(56) References cited:
- EP-A- 0 496 029
- EP-A- 0 639 703
- EP-A- 0 694 682
- EP-A- 0 741 237
- US-A- 5 107 810
- PATENT ABSTRACTS OF JAPAN vol. 018, no. 569 (M-1695), 31 October 1994 & JP 06 207542 A (TOYOTA MOTOR CORP), 26 July 1994
- PATENT ABSTRACTS OF JAPAN vol. 018, no. 338 (M-1628), 27 June 1994 & JP 06 081651 A (MITSUBISHI MOTORS CORP), 22 March 1994
- PATENT ABSTRACTS OF JAPAN vol. 016, no. 576 (M-1345), 16 December 1992 & JP 04 224231 A (TOYOTA MOTOR CORP), 13 August 1992
- PATENT ABSTRACTS OF JAPAN vol. 018, no. 338 (M-1628), 27 June 1994 & JP 06 081655 A (TOYOTA MOTOR CORP), 22 March 1994

## Description

The present invention relates to a direct injection type internal combustion engine.

An engine of this type is known from Japanese laid-open patent application no. 6-81651.

According to this, such an engine comprises a cylinder main body possessing a cylinder hole and a cylinder head which is installed at the upper end of the cylinder main body in a manner such that it closes the end of the cylinder hole which is the upper end when the axis of the cylinder hole is viewed at right angles There is provided a piston which is fitted in the cylinder hole and can slide along its axis, and the space between the top portion of the cylinder hole and the lower surface of the cylinder head constitutes a combustion chamber.

Taking one horizontal direction of the cylinder as the front direction, an air intake passage which connects the exterior of the cylinder head with the front portion of the combustion chamber is formed in the cylinder head, and the portion of this intake passage which opens into the combustion chamber constitutes an intake opening portion. Further, an exhaust passage which connects the rear portion of the combustion chamber to the exterior of the cylinder head is formed in the cylinder head, and the portion of this exhaust passage which opens into the combustion chamber constitutes an exhaust opening portion.

There is provided an intake valve which can open and close the intake opening portion. This intake valve is constituted by a valve stem which is located on the same axis as the intake opening portion and is supported by the cylinder head in a manner such that it can move in the direction of this axis and a valve body which is on the same axis as this valve stem and is fixed to the lower end of the valve stem and which, accompanying the abovenoted movement of the valve stem, opens and closes the intake opening portion from its lower end. Further, there is provided an exhaust valve which can open and close the exhaust passage. This exhaust valve is constituted by a valve stem which is located on the same axis as the exhaust opening portion and is supported by the cylinder head in a manner such that it can move along this axis and a valve body which is on the same axis as this valve stem and is fixed to its lower end and which, accompanying the abovenoted movement of the valve stem, opens and closes the exhaust opening portion from its lower end.

There is provided a rod-shaped fuel injection valve which supplies fuel by injecting it towards the combustion chamber. This fuel injection valve has, on the axis of one end portion thereof, a fuel injection nozzle which injects fuel. There is also provided a rod-shaped spark plug which ignites fuel in the combustion chamber and which has at one end portion thereof an electrical discharge portion which faces the combustion chamber.

During operation of the engine, in the intake stroke, external air is drawn into the combustion chamber in the cylinder hole via the intake passage. Also in the intake stroke, fuel is injected into the combustion chamber from the fuel injection valve, and this fuel is mixed with abovenoted air to produce a mixture with air. In a subsequent power stroke following a compression stroke, this fuel with admixed air is burned in the combustion chamber, the thermal energy produced by this combustion is converted to drive power, and this drive power is output via a crankshaft.

In the subsequent exhaust stroke, exhaust of the accompanying combustion gases produced by the abovenoted combustion is effected, and these gases are discharged via the exhaust passage.

Subsequently, the operation of the engine is continued by repetition of the strokes described above.

However, with this prior art, since the spark plug is at a large inclination with respect to the axis of the cylinder, the valve stems of the intake valve and exhaust valve too are inclined, in order to avoid interference with the spark plug, and these two valve stems are inclined in a manner such that they become further apart going upward.

Therefore, the valve bodies fixed to respective valve stems are in attitudes in which, relative to the cylinder's axis, they are inclined in opposite directions to one another, and, in addition, the intake opening portion and exhaust opening portion too are inclined in opposite directions to one another. As a result, the combustion chamber's roof surface, which is the lower surface of the cylinder head, has an approximately triangular shape when viewed from the side.

Consequently, the combustion chamber's roof surface has a deep recess shape and there is a risk of the following drawbacks occurring.

First, the flame propagation when fuel is burned in the combustion chamber becomes slow, and so improvement of the engine performance is hindered.

Second, the space between the piston's top surface and the combustion chamber's roof surface when the piston reaches top dead center has a large volume.

Therefore, the compression ratio cannot be made sufficiently large and improvement of the engine performance is hindered in this respect too.

Third, since the S/V value (S : combustion chamber surface area, V : combustion chamber volume) becomes large, the heat loss is large and improvement of the engine performance is hindered.

Fourth, since, as described above, the intake valve, exhaust valve and the spark plug are greatly inclined with respect to the cylinder's axis, the fuel injection valve too is made greatly inclined, in order to avoid interference with these parts.

Therefore, when fuel in injected by the fuel injection valve in the compression stroke when the piston rises and this injected fuel strikes the top surface of the piston, the angle of incidence of the injected fuel on the piston's top surface is small, and so, after striking this top surface, the fuel does not turn upward. In other words, since it is not turned to the spark plug discharge portion, the ignitability deteriorates and improvement of the engine performance is hindered.

An idea, in view of the 1st - 4th drawbacks described above, is to make the piston's top surface project upwards so that, seen from the side, it has a triangular shape and to fit this triangular top surface of the piston into the recess shape of the combustion chamber's roof surface when the piston reaches top dead center.

If this is done, the volume of the space between the piston's top surface and the combustion chamber's roof surface when the piston reaches top dead center is reduced and there is a corresponding increase in the compression ratio, in addition to which the air which is caught between the piston's top surface and the combustion chamber's roof surface is caused to turn to the spark plug discharge portion and the ignitability is improved.

However, when the piston's top surface is caused to project upwards in the manner described above, the center of gravity becomes higher by a corresponding amount, and, therefore, when the piston is subjected to an impact force from the combustion chamber side, it performs turning movements, in an oscillating manner, relative to the top end of the connecting rod by which it is supported and noise is produced.

Prior art document EP 0 694 682 teaches a spark-ignited direct cylinder fuel injection engine. Said engine is provided with a combustion chamber formed in a depression of the surface of each piston and a direct cylinder fuel injection valve sprays a fuel mist directly into said combustion chamber. When said engine is operated under light load with a small amount of fuel, the fuel injection is started at a relatively late stage of the compression stroke. When said engine is operated under heavy load with a large amount of fuel, said fuel injection is started at a relatively early stage of the compression stroke.

Prior art document EP 0 496 029 teaches an internal combustion engine with an air blast valve which injects fuel together with pressurized air directly into a combustion chamber of said engine. The spark plug of said engine is provided with a discharge portion being arranged close to a cylinder axis and close to a joining plane of a cylinder head and a cylinder main body. The fuel is injected together with pressurized air from the air blast valve within the second half of compression stroke.

Moreover, a direct injection type internal combustion engine, in particular, a spark ignition engine with a fuel injector for injecting fuel directly into the cylinder can be taken from EP 0 639 703 A1. Said prior art document teaches a direct injection type internal combustion engine with a piston having a hollow combustion chamber formed in an upper surface of said piston. An ignition plug is inserted into the vicinity of the side wall of the combustion chamber. Furthermore, a fuel injector is provided for injecting fuel towards the side wall of the combustion chamber, wherein said fuel is guided to the ignition plug. Said ignition plug is arranged close a cylinder axis of said engine. With regard to the engine load condition, fuel is injected during intake stroke or compression stroke of the engine. In particular, for a high engine load fuel is injected during intake stroke. For low engine load fuel is injected during compression stroke. For medium engine load a certain amount of fuel is injected in the latter half of the compression stroke similar to the low engine load driving conditions and the remaining amount of fuel is injected during the intake stroke similar to the high engine load driving conditions.

An ignition plug is inserted into the vicinity of the side wall of the combustion chamber. Furthermore, a fuel injector is provided for injecting fuel towards the side wall of the combustion chamber, wherein said fuel is guided to the ignition plug. Said ignition plug is arranged close a cylinder axis of said engine. With regard to the engine load condition, fuel is injected during intake stroke or compression stroke of the engine. In particular, for a high engine load fuel is injected during intake stroke. For low engine load fuel is injected during compression stroke. For medium engine load a certain amount of fuel is injected in the latter half of the compression stroke similar to the low engine load driving conditions and the remaining amount of fuel is injected during the intake stroke similar to the high engine load driving conditions.

It is an objective of the present invention to provide a direct injection type internal combustion engine, wherein the ignitability of the fuel is improved and a high engine performance is provided.

According to the present invention, said objective is solved by a direct injection type internal combustion engine according to claim 1.

Therefore, the intake valves and exhaust valves in the cylinder head and the spark plug can be arrayed dispersed in a front-rear direction and the spark plug can be in a generally perpendicular attitude, so that the respective valve stems and the intake valves and exhaust valves too can be made generally perpendicular without interfering with the spark plug.

Consequently, along with this, the intake opening portions and exhaust opening portions too are approximately at right angles to the axis of the cylinder and as a result, overall, the roof surface of the combustion change, which is the bottom surface of the cylinder head corresponding to the combustion chamber, is made a flatter surface which is approximately horizontal.

Further, seen in a side view, the discharge portion is located close to the cylinder main body and cylinder head connection portion.

Therefore, the discharge portion is positioned lower than in the past and, along with this, overall, the roof surface of the combustion chamber is brought close to the cylinder main body.

Therefore, first, since the roof surface of the combustion chamber is flat, the flame propagation when fuel is burned in the combustion chamber is faster, and so the engine performance is improved.

Second, when the piston reaches top dead center, the space between the top surface of the piston and the roof surface of the combustion chamber has a small volume.

Therefore, the compression ratio can be made large and the engine performance is improved.

Third, since the roof surface of the combustion chamber is flat, the surface area of the combustion chamber and the surface area/volume ratio (S/V) become correspondingly smaller, and as a result heat losses are kept small and the engine performance is improved.

According to a preferred embodiment, the spark plug extends substantially parallel to the cylinder axis.

Since the intake valves and exhaust valves, as well as the spark plug, can be in generally or even strictly perpendicular attitudes, the angle of inclination of the fuel injection valve relative to the axis of the cylinder can be made small without any interference with these parts being caused.

Therefore, when fuel is injected by the fuel injection valve in the compression stroke in which the piston rises, since the angle of incidence of the injected fuel with respect to the top surface of the piston on impact of the fuel against the top surface of the piston is large, the fuel is strongly reflected upward following the impact against the top surface, ie, it is moved smoothly toward the discharge portion of the spark plug, so improving the ignitability and hence the engine performance.

Further, since, as described above, the discharge portion is close to the cylinder main body and cylinder head connection portion, and is positioned lower than in the past, the air-fuel mixture which rises as the result of being pushed upward by the top surface of the piston is easily captured, and so the ignitability is improved still more.

According to another preferred embodiment, the angle of inclination of the axis of the fuel injection valve to the joining plane is made 30 - 45°, so that the fuel injection nozzle opens facing an oblique downward direction of the combustion chamber.

Therefore, in the case where fuel is injected by the fuel injection valve in the compression stroke in which the piston rises, the angle of incidence, on the top surface of the piston, of the injected fuel when it strikes the top surface of the piston can be made larger to a certain degree.

Consequently, following impact against this top surface, fuel is reflected strongly upward, ie, it is directed more smoothly towards the discharge portion of the spark plug, the ignitability is improved, and as a result the engine performance is improved.

Preferably, the fuel injection valve is mounted in the cylinder main body.

This is advantageous in cases in which it is difficult to ensure space for mounting the fuel injection valve in the cylinder head, such as in cases in which plural intake valves and plural exhaust valves are mounted in the cylinder head.

According to another embodiment, a depression which opens towards the combustion chamber is formed in a portion of the top surface of the piston, and this depression is shaped in a manner such that its inner surface guides fuel which has been injected from the fuel injection valve towards the discharge portion.

Therefore, particularly in the compression stroke in which the piston rises, when fuel is injected by the fuel injection valve, the injected fuel is guided by the depression toward the discharge portion.

Consequently, the injected fuel is directed in a surer manner to the discharge portion, the ignitability is further improved, and there is further improvement of the engine performance.

Further, as described above, since the space between the top surface of the piston and the roof surface of the combustion chamber has a small volume when the piston reaches top dead center, the air caught between the other portion of the piston's top surface and the combustion chamber roof surface which faces this other portion when the piston approaches top dead center becomes squish flow, and as a result fuel injected from the fuel injection valve is forced into the abovenoted depression.

Consequently, when the piston is located at top dead center, the fuel in the depression is ignited in a sure manner by the spark plug, and the engine performance is improved.

According to a further embodiment, the portion which, within the peripheral wall of the depression, faces the fuel injection nozzle in the horizontal direction is made a vertical wall, and an intermediate portion of this vertical wall in the upward-downward direction is made an arcuate recess surface which is more recessed in the horizontal direction than its top portion.

Therefore, particularly in the compression stroke in which the piston rises, when fuel is injected by the fuel injection valve, even if the angle of inclination of the fuel injection valve relative to an imaginary horizontal plane is small, fuel injected from the fuel injection valve is guided in a sure manner towards the discharge portion.

Consequently, injected fuel is directed still more surely toward the discharge portion, and there is still surer improvement of the ignitability and of the engine performance.

According to another embodiment, the combustion chamber is made such that, when the piston reaches top dead center, at least the lower end of the discharge portion of the spark plug enters into the abovenoted depression.

Therefore, when the piston reaches top dead center, the top surface of the piston can be caused to approach satisfactorily close to the roof surface of the combustion chamber without interfering with the discharge portion of the spark plug, and so the volume of the combustion chamber space between the top surface of the piston and the roof surface of the combustion chamber becomes correspondingly smaller and the compression ratio is made still greater, in addition to which air which is caught between the portion of the top surface of the piston other than where the depression is formed and the combustion chamber roof surface facing this other portion becomes a strong squish flow, and, in the fuel which has been injected from the fuel injection valve, a rich air-fuel mixture is forced in a surer manner into the depression.

Consequently, when the piston is located in the vicinity of the top dead center, ignition of fuel in the depression by the discharge portion of the spark plug is effected in a surer manner, and the engine performance is improved.

Further, although, as described above, the top surface of the piston approaches satisfactorily close to the roof surface of the combustion chamber when the piston reaches top dead center, the center of gravity of the piston is still kept low, since, as described with reference to the embodiments, the roof surface of the combustion chamber has originally been made low, in order to position it close to the upper end of the cylinder main body.

Therefore, even though the piston is subjected to an impact force from the combustion chamber side, especially in the power stroke, the repetition of turning movements in an oscillating manner by the piston is suppressed and so the production of noise is prevented.

According to another embodiment in the combustion chamber which lies between the top surface of the piston and the roof surface of the combustion chamber, when the piston reaches top dead center, seen in a side view, the width dimension between the piston and the cylinder head at the side which is at the outer side going radially from the axis of the cylinder is larger than the width dimension between the piston and the cylinder head next to the axis.

Therefore, even when the piston reaches top dead center, a comparatively large space remains in the portion of the combustion chamber which is the outer-side portion thereof going radially from the axis, and fuel remains in this space.

Therefore, in the subsequent power stroke, when the piston starts to move down, the flame in the vicinity of the axis of the cylinder which results from the start of combustion consequent to ignition by the discharge portion of the spark plug is also propagated rapidly to the outer-side portion of the combustion chamber, because of the fuel which remains, and as a result the flame propagation in the combustion chamber is uniformly accelerated, and the engine performance is improved.

Detailed examples of the invention will be described hereinafter with reference to the accompanying drawings:
Fig. 1 shows a 1st form of practice, and it is a cross-sectional view seen along the arrow 1-1 of Fig. 2 and an overall side view of an engine in which fuel is injected in the compression stroke.
Fig. 2 is a bottom view of a cylinder head in the 1st form of practice.
Fig. 3 is a side cross-section of a piston in the 1st form of practice
Fig. 4 shows the 1st form of practice and is a cross-sectional view seen along the arrow 4-4 of Fig. 3.
Fig. 5 is a plane view of the piston in the 1st form of practice.
Fig. 6 shows the 1st form of practice and is a drawing which corresponds to Fig. 1, and it is a side view of the engine when the piston has reached top dead center.
Fig. 7. shows the 1st form of practice, and is a cross-sectional view seen along the arrow 7-7 of Fig. 6.
Fig. 8 shows the 1st form of practice and is a drawing which corresponds to Fig. 1, and it is a drawing which corresponds to a portion of Fig. 1 when fuel is injected in the compression stroke.
Fig. 9 shows the 1st form of practice and is a drawing which corresponds to Fig. 1, and it is a drawing for the purpose of describing the action in relation to Fig. 8.
Fig. 10 is a plot of a map for determining engine operating modes in accordance with engine rotary speeds and engine loads.
Fig. 11 compares exhaust valve opening and closing times and times of injection by a fuel injection valve.
Fig. 12 is a graph which shows the relation between the crank angle and the pressure inside a cylinder in the 1st form of practice.
Fig. 13 is a graph which shows the relation between exhaust temperature and engine rotary speed.
Fig. 14 shows a 2nd form of practice, and it is a view along the line 14-14 of Fig. 15 and is an overall side view of an engine in which fuel is injected in the compression stroke.
Fig. 15 shows the 2nd form of practice and is a drawing which corresponds to Fig. 2.
Fig. 16 shows the 2nd form of practice and is an enlarged cross-section of a portion of Fig. 14.
Fig. 17 is a drawing which corresponds to Fig. 16 when the arrangement is that fuel is injected in the compression stroke in the 2nd form of practice.
Fig. 18 shows the 2nd form of practice and is a drawing which corresponds to Fig. 16.
Fig. 19 shows a modification of the piston in the 2nd form of practice, and it is a drawing which corresponds to Fig. 17.

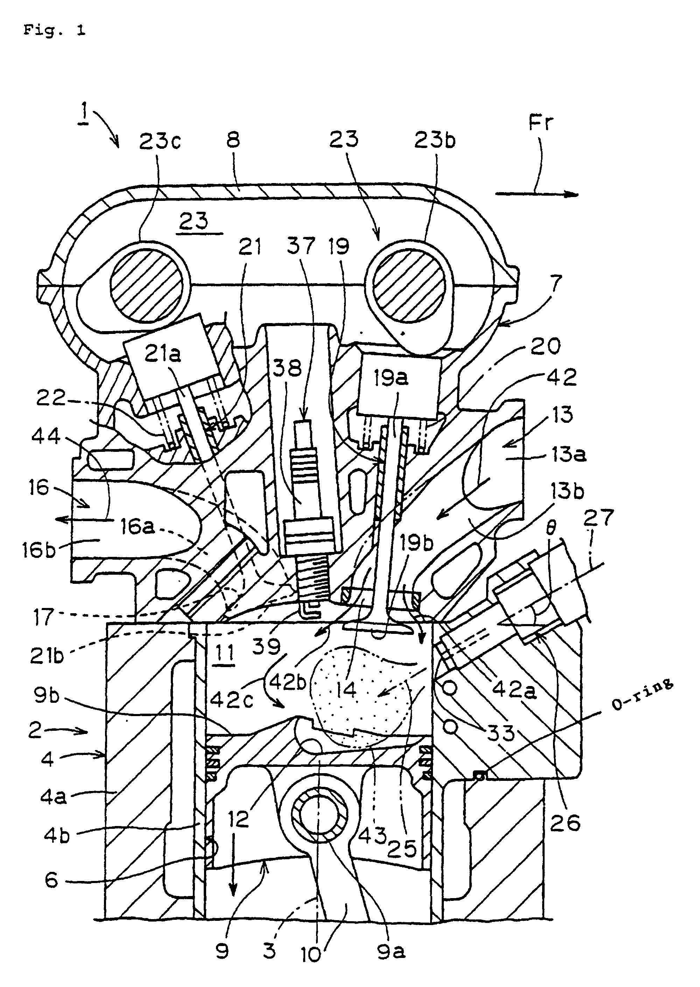

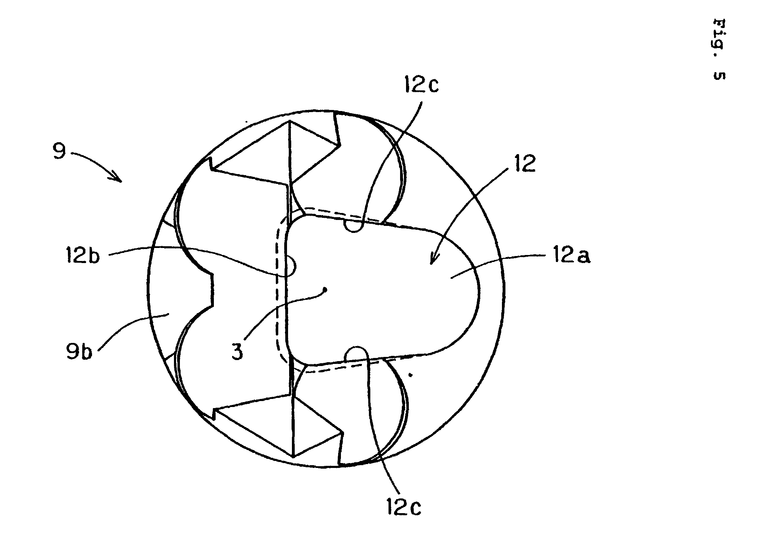

Figs. 1 - 13 show a 1st form of practice.

In the drawings, the symbol 1 indicates a 4-cycle engine which is an internal combustion engine. For convenience of description, the direction marked Fr in the drawings (which corresponds to 'one horizontal direction') is taken to be the front direction, and leftward and rightward noted below means the horizontal direction going toward this front direction. Although an engine 1 with a single cylinder is shown in the example of the drawings, it may also be an engine with plural cylinders.

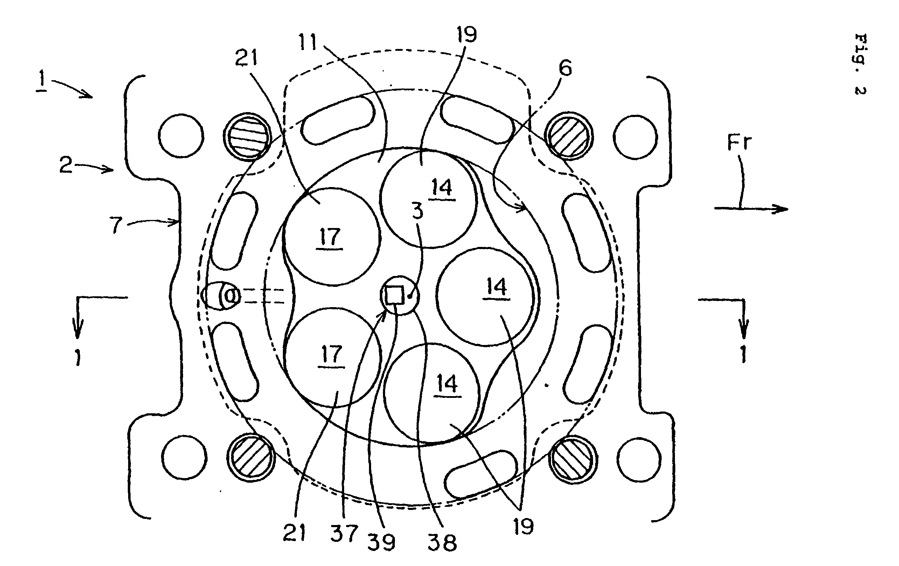

In Figs. 1 and 2, the engine 1 is provided with a crankcase which supports a crankshaft whose axis extends leftward and rightward and a cylinder 2 which projects upward from this crankshaft. This cylinder 2 comprises a cylinder main body 4 with a vertical axis 3, a cylinder hole 6 which is formed in the cylinder main body 4 on the axis 3, a cylinder head 7 which is fitted at the upper end which is the projecting end at the top of the cylinder main body 4 in a manner such that it closes the top end of the cylinder hole 6, and a cylinder head cover 8 by which the top surface of the cylinder head 7 is closed in an openable and closable manner. The cylinder main body 4 is constituted by a cylinder main body base portion 4a and a sleeve 4b which is fitted in the cylinder main body base portion 4a and inside which the cylinder hole 6 is formed.

A piston 9 is fitted in the axial direction in the cylinder hole 6 6 in a manner such that it is free to slide up and down, and this piston 9 is connected to the abovenoted crankshaft by a piston pin 9a and a connecting rod 10. The space which extends from the top portion of the interior of the cylinder hole 6 to the bottom surface of the cylinder head 7 is a combustion chamber 11, and a depression 12 which opens towards the combustion chamber 11 is formed in a portion of the top surface 9b of the piston 9.

The engine 1 has five valves.

More specifically, an air intake passage 13 which connects the front of the cylinder head 7 to the portion of the combustion chamber 11 which is the front portion when the cylinder 2 is seen in a side view (Fig. 1) is formed in the cylinder head 7. The upstream portion of this intake passage 13 is made a single main passage 13a, and in its downstream portion it is made branch passages 13b constituting plural (three) branches from the downstream end of the main passage 13a. The upstream end of the main passage 13a is connected via a throttle valve and an air cleaner not shown to the exterior, which is on the atmosphere side. Respective opening portions of the branch passages 13b open into the front portion of the combustion chamber 11 and each constitute an intake opening portion 14. Each intake opening portion 14 has an approximately perpendicular axis and opens rearward and downward.

An exhaust passage 16 which connects the rear portion of the combustion chamber 11 to the exterior at the rear of the cylinder head 7 is formed in the cylinder head 7. This exhaust passage 16 is made plural (two) branch passages 16a in its upstream portion, and the downstream ends of these two branch passages 16a converge to constitute a main passage 16b in the upstream portion. The portion of each of the branch passages 16a which opens into the rear portion of the combustion chamber 11 constitutes an exhaust opening portion 17. The downstream end of the main passage 16b opens to the exterior on the atmosphere side via a silencer, etc. not shown.

There are provided plural (three) intake valves 19 which open and close respective intake opening portions 14. These intake valves 19 are made longitudinally long shapes, and they are supported by the cylinder head 7 in a manner such that they can move up and down on the axes of the intake opening portions 14. More specifically, an intake valve 19 is constituted by a valve stem 19a which is located on the same axis as an intake opening portion 14 and is supported by the cylinder head 7 in a manner such that it can move in the direction of this axis and a valve body 19b which is on the same axis as this valve stem 19a and is fixed to the lower end of the valve stem 19a and which, accompanying the movement of the valve stem 19a, opens and closes the intake opening portion 14 from its lower end. Further, each intake valve 19 is urged by a respective spring 20 in a manner causing its valve body 19b to close the respective intake opening portion 14.

There are provided plural (two) exhaust valves 21 which open and close respective exhaust opening portions 17. These exhaust valves 21 are made longitudinally long shapes, and they are supported by the cylinder head 7 in a manner such that they can move up and down on the axes of the exhaust opening portions 17. More specifically, an exhaust valve 21 is constituted by a valve stem 21a which is located on the same axis as an exhaust opening portion 17 and is supported by the cylinder head 7 in a manner such that it can move in the direction of this axis and a valve body 21b which is on the same axis as this valve stem 21a and is fixed to the lower end of the valve stem 21a and which, accompanying the movement of the valve stem 21a, opens and closes the exhaust opening portion 17 from its lower end. Further, each exhaust valve 21 is urged by a respective spring 22 in a manner causing it to close the respective exhaust opening portion 17.

There is provided a valve actuation mechanism 23 which is linked to the crankshaft noted above and which, at a set crank angle, causes the intake valves 19 and exhaust valves 21 to perform opening operations counter to their respective springs 20 and 22. This valve actuation mechanism 23 has a valve actuation chamber 23a which is formed between the cylinder head 7 and the cylinder head cover 8 and an intake valve camshaft 23b and exhaust valve camshaft 23c which are accommodated in the valve actuation chamber 23a and are linked to the camshaft. The intake valve camshaft 23b is in cam engagement with the intake valves 19 and the exhaust valve camshaft 23c is in cam engagement which the exhaust valves 21.

The intake valves 19 and exhaust valves 21 are caused to perform opening and closing operations by the springs noted above and the intake valve camshaft 23b and exhaust valve camshaft 23c of the valve actuation mechanism 23 which is linked to the crankshaft, and the intake opening portions 14 and exhaust opening portions 17 are opened and closed at set crank angles.

In Figs. 1 and 2, a fuel injection valve 26 which can inject and supply fuel 25, which is gasoline, into the combustion chamber 11 in the cylinder hole 6 is installed in the upper portion of the sleeve 4b, below the cylinder main body 4.

This fuel injection valve 26 has a rod-shape whose axis 27 extends in a straight line and, on the axis 27 at one end portion thereof, it has a fuel injection nozzle 33 which injects the fuel 25. The end portion of the fuel injection valve 26 where this fuel injection nozzle 33 is provided is located in the upper portion of the cylinder main body 4. The fuel injection nozzle 33 opens obliquely downward toward the bottom rear from the upper front portion of the combustion chamber 11. Therefore, fuel 25 injected by the fuel injection valve 26 is injected toward the bottom rear portion from the upper front portion of the combustion chamber 11. In this case, the angle θ of inclination of the axis 27 of the fuel injection valve 26 to an imaginary horizontal plane is made 30 - 45°. In terms of the crank angle position of the top surface 9b of the piston 9, the location of the end portion of the fuel injection valve 26 is close to 60° ATDC.

There is provided a rod-shaped spark plug 37 by which fuel 25 in the combustion chamber 11 is ignited and caused to be burned. This spark plug 37 is constituted by a main body portion 38 which is mounted in the cylinder head 7 and a discharge portion 39 which is mounted on one end portion of this main body portion 38 and faces the combustion chamber 11. The spark plug 37 is approximately parallel to the axis 3 of the cylinder 2, and the spark plug 37 together with its discharge portion 39 is located close to the axis 3. Seen in a side view, the discharge portion 39 is located close to the cylinder main body 4 and cylinder head 7 connection portion.

'Close to the connection portion' noted above means with the range, as seen in a side view, of the dimension of the projection of the discharge portion 39 from the main body portion 38 in the upward-downward direction, taking the lower end of the discharge portion 39 as a reference.

In Figs. 1 and 3-5, as described above, a depression 12 which opens toward the combustion chamber 11 is formed in a portion of the top surface 9b of the piston 9. The inner surface of this depression 12 is formed in a manner such that partway through the up and down sliding movement of the piston 9 in the cylinder hole 6 fuel 25 which has been injected from the fuel injection valve 26 is guided toward the discharge portion 39 of the spark plug 37.

The inner surface of the depression 12 comprises a bottom surface 12a which extends flatly in a generally horizontal direction and a peripheral wall which extends upwards from the outer edge portion of the bottom surface 12a and reaches the top surface 9b. Within this peripheral wall, the portion which faces the fuel injection nozzle 33 in the horizontal direction (the front-rear direction) is made a vertical wall 12b. An intermediate portion, in the upward-downward direction, of this vertical wall 12b is made an arcuate recess surface which, going horizontally, is more recessed in the forward direction than the top portion of the vertical wall. Further, intermediate portions, in the upward-downward direction, of the left and right side walls 12c and 12c in the horizontal direction are made arcuate curved surfaces which, going horizontally, are more recessed in the left-right outward directions than the top portion of the vertical wall.

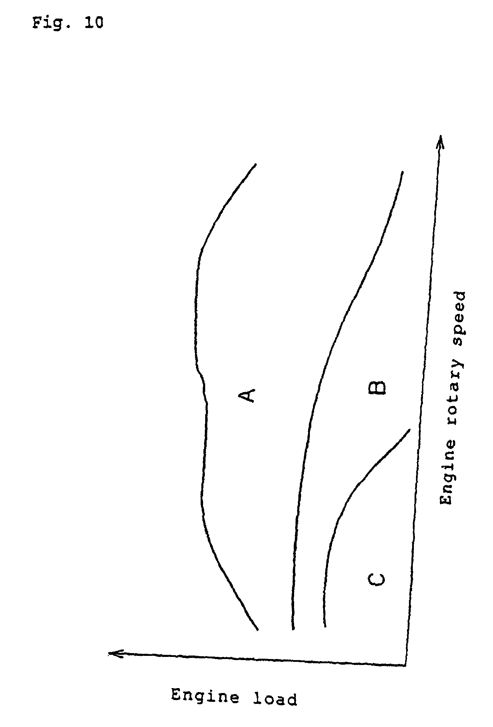

There is provided an engine control unit which controls the engine 1 electronically. This control unit has the map shown in Fig. 10. This map determines the operating modes A - C of the engine 1 in accordance with the engine's rotary speed and the engine load.

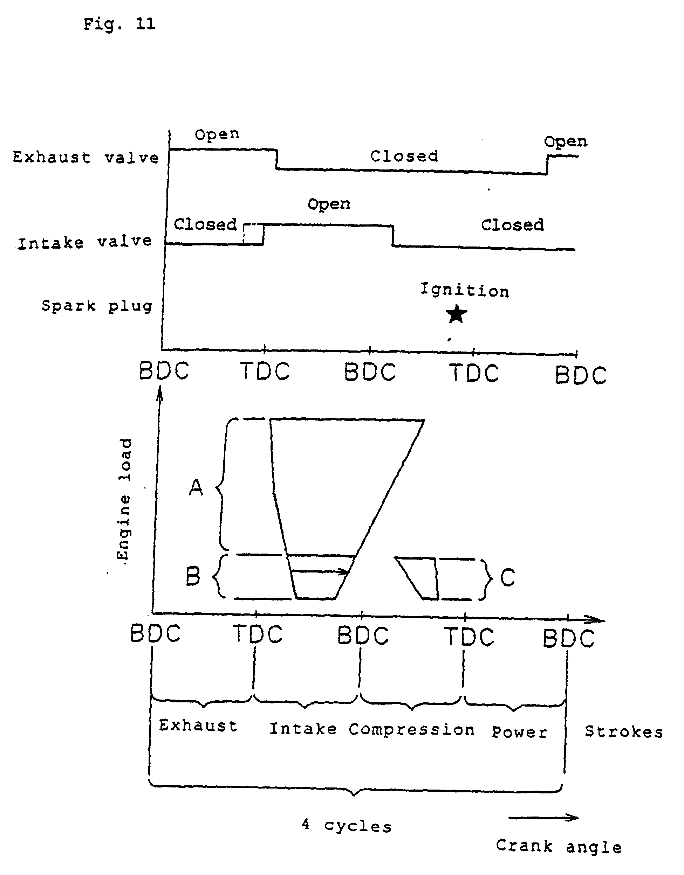

In Figs. 1, 2, 10 and 11, whatever operating mode A - C it is in, the engine 1 basically operates as follows. In Fig. 11 BDC indicates that the piston 9 is at bottom dead center, and TDC indicates that the piston 9 is at top dead center.

In the intake stroke of the engine 1, the piston 9 moves down and, together with this, the intake valves 19 perform valve opening operations and the intake opening portions 14 are opened. Hereupon, external air 42 is drawn into the cylinder hole 6 via the intake passage 13. The valve opening start time of the intake valves 19 can be adjusted, as indicated by the chain-dot line in Fig. 11.

Also, in the intake stroke, fuel 25 is injected into the cylinder hole 6 from the fuel injection valve 26, and this fuel 25 is mixed with the air 42 to produce an air-fuel mixture 43 in the form of a mist. In the power stroke following the compression stroke, the fuel 25 in this air-fuel mixture 43 is burned in the cylinder hole 6, the thermal energy produced by this combustion is converted to drive power, and this drive power is output via the crankshaft.

In the exhaust stroke following the power stroke, the exhaust valves 21 perform valve opening operations, and the exhaust opening portions 17 are opened. Hereupon, the combustion gases produced by the abovenoted combustion come to constitute exhaust and are discharged to the exterior via the exhaust passage 16. Instead of being effected in the intake stroke, injection of fuel 25 by the fuel injection valve 26 may be effected in the compression strokes.

Subsequently, operation of the engine 1 is continued by repeating the strokes described above.

Below, the operating modes A - C of the engine 1 will be described with reference to Figs. 1, 10 and 11.

In Fig. 10, whether the engine rotary speed of the engine 1 is high or low, operating mode A is automatically selected by the control unit when the engine load is high.

When the engine 1 is operating in this operating mode A, as shown in Fig. 11, injection of fuel 25 by the fuel injection valve 26 is effected in the intake stroke, and the timing and duration of this injection are determined in accordance with the engine load.

When external air 42 is drawn into the cylinder hole 6 via the intake passage 13 in the intake stroke, the flow rate of the 2nd branch stream 42b which, within the flow of the air 42, passes through the rear gap becomes greater than that of the 1st branch stream 42a which passes through the front gap. The 2nd branch stream 42b passes through the rear gap 47 and flows rearward through the space inside the cylinder hole 6, then it is guided by the rear inner peripheral surface of the cylinder hole 6 and temporarily turns down and then it is guided by the top surface of the piston 9 and rolls back to the front, so producing a vigorous rolling flow 42c (tumble flow).

Further, when fuel 25 is injected from the fuel injection valve 26 in the intake stroke, the leading edge portion of the fuel 25 spray (of the air-fuel mixture 43) extends toward the lower rear, which is the injection direction, and is directed linearly (ie, directly) toward the rear inner peripheral surface of the cylinder hole 6.

However, the fuel 25 which is attempting to go to the lower rear strikes against the inverted flow 42c of the 2nd branch stream 42b and this restricts the attempt of the fuel 25 to go linearly toward the rear inner peripheral surface of the cylinder hole 6 and causes the injected fuel 25 to turn toward the front portion inside the cylinder hole 6 and the depression 12 of the piston 9, and so a rich air-fuel mixture 43 is forced into the depression 12.

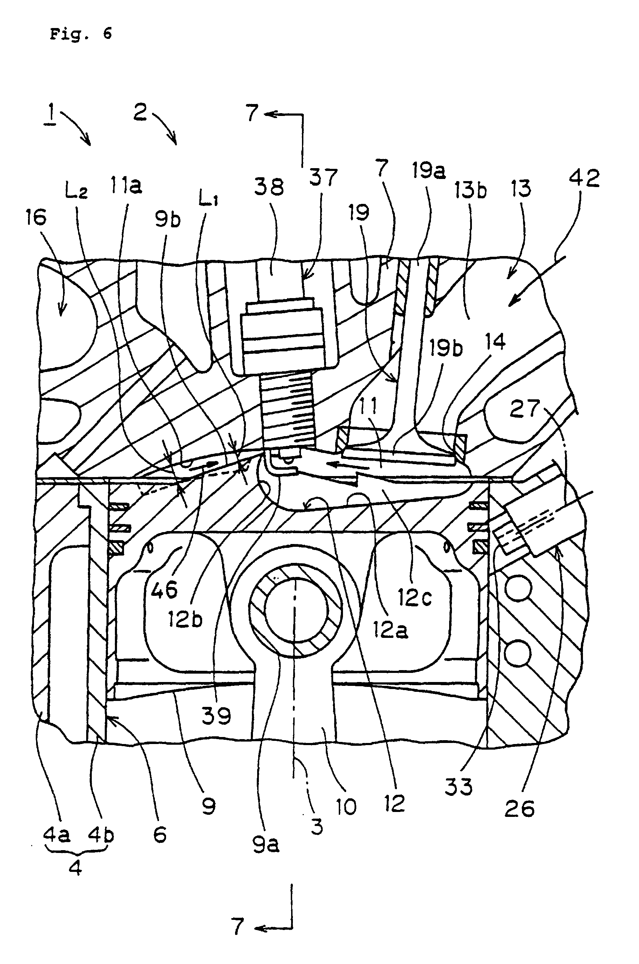

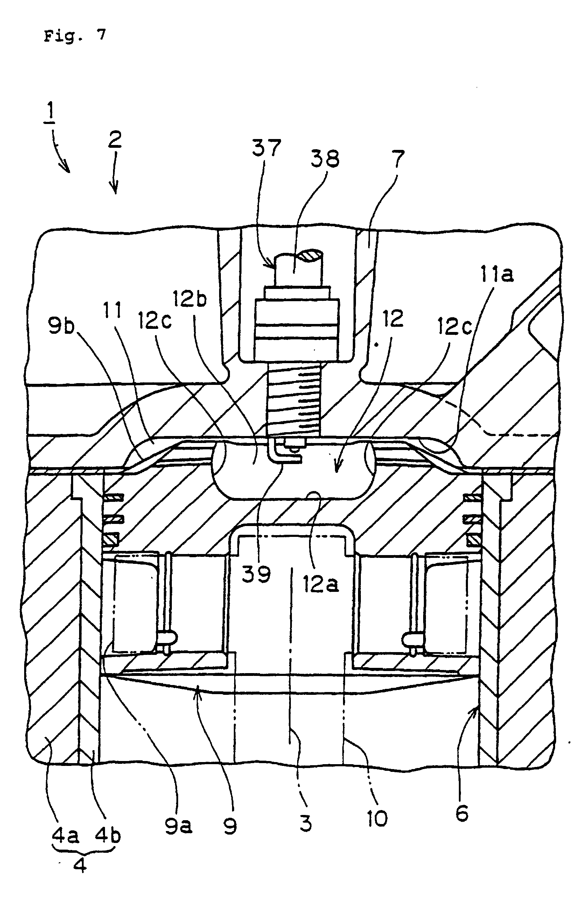

In Figs. 6 and 7, when the piston 9 reaches top dead center at the end of the compression stroke of the engine 1, the air caught between the top surface 9b of the piston 9 and the roof surface 11a of the combustion chamber 11 flows as a squish flow 46 from the outer-side portion of the combustion chamber 11 toward the depression 12, and this too results in a rich air-fuel mixture 43 being forced into the depression 12.

Therefore, the air-fuel mixture 43 can be ignited in a sure manner by discharge by the spark plug 37 when the piston 9 is in the vicinity of top dead center, ie, the ignition performance is improved.

Further, as described above, the spark plug 37 is made approximately parallel to the axis 3 of the cylinder 2 and it is located together with its discharge portion 39 close to this axis 3. Since, therefore, the intake valves 19, the exhaust valves 21 and the spark plug 37 are arrayed dispersed in the front-rear direction and the spark plug 37 is in a generally perpendicular attitude, there is no interference with the spark plug 37, and the respective valve stems 19a and 21a of the intake valves 19 and exhaust valves 21 are also in generally perpendicular attitudes.

Consequently, the valve main bodies 19b and 21b fixed to the respective valve stems 19a and 21a are in attitudes which are approximately at right angles to the axis 3 of the cylinder 2 and, along with this, the intake opening portions 14 and exhaust opening portions 17 too are approximately at right angles to the axis 3 of the cylinder 2. As a result, overall, the roof surface 11a of the combustion chamber 11, which is the bottom surface of the cylinder head 7 corresponding to the combustion chamber 11, is made a flatter surface which is approximately horizontal.

Since, seen in a side view, the discharge portion 39 is located close to the cylinder main body 4 and cylinder head 7 connection portion, it is located lower than in the past, and, therefore, overall, the roof surface 11a of the combustion chamber 11 is brought close to the cylinder main body 4.

Therefore, first, since the roof surface 11a of the combustion chamber 11 is flat, the flame propagation when fuel 25 is burned in the combustion chamber 11 is faster, and so the engine performance is improved.

Second, when the piston 9 reaches top dead center, the space between the top surface 9b of the piston 9 and the roof surface 11a of the combustion chamber 11 has a small volume, and so the compression ratio is large and the engine performance is improved.

Third, since the roof surface 11a of the combustion chamber 11 is flat, the surface area of the combustion chamber 11 and the S/V value become correspondingly smaller, and as a result, heat losses are kept small and the engine performance is improved.

In Figs. 6 and 7, the arrangement is that, when the piston 9 reaches top dead center, at least the lower end of the discharge portion 39 of the spark plug 37 enters into the depression 12.

Therefore, when the piston 9 reaches top dead center, the top surface 9b of the piston 9 approaches satisfactorily close to the roof surface 11a of the combustion chamber 11, but without interfering with the discharge portion 39 of the spark plug 37, and so the volume of the combustion chamber 11 space between the top surface 9b of the piston 9 and the roof surface 11a of the combustion chamber 11 becomes correspondingly smaller and the compression ratio is improved still more. Also, air which is caught between the portion of the top surface 9b of the piston 9 other than where the depression 12 is formed and the combustion chamber 11 roof surface 11a facing this other portion becomes a strong squish flow 46, and, in the fuel 25 which has been injected from the fuel injection valve 26, a rich air-fuel mixture 43 is forced in a surer manner into the depression 12.

Consequently, when the piston 9 is located in the vicinity of the top dead center, ignition of fuel 25 in the depression 12 by the discharge portion 39 of the spark plug 37 is effected in a surer manner, and the engine performance is improved.

Further, although, as described above, the top surface 9b of the piston 9 approaches satisfactorily close to the roof surface 11a of the combustion chamber 11 when the piston 9 reaches top dead center, the center of gravity of the piston 9 is still kept low, since, as described above, the roof surface 11a of the combustion chamber 11 has originally been made low, in order to position it close to the upper end of the cylinder main body 4.

Therefore, even though the piston 9 is subjected to an impact force from the combustion chamber 11 side, especially in the power stroke, the repetition of turning movements in an oscillating manner by the piston 9 is suppressed and so the production of noise is prevented.

As shown in Figs. 6 and 7, in the combustion chamber 11 lying between the top surface 9b of the piston 9 and the roof surface 11a of the combustion chamber 11, when the piston 9 reaches top dead center, seen in a side view (Fig. 6) of the interval between the left and right exhaust opening portions 17 and 17 constituting at least a portion around the abovenoted axis 3, the width dimension L₂ at the side which is at the outer side going radially from the axis 3 is larger than the width dimension L₁ at the axis 3 side of the combustion chamber 11.

Therefore, even when the piston 9 reaches top dead center, a comparatively large space remains in the portion of the combustion chamber 11 which is the outer-side portion thereof going radially from the axis 3 of the cylinder 2, and fuel 25 remains in this space.

Therefore, in the subsequent power stroke, when the piston 9 starts to move down, the flame in the vicinity of the axis 3 of the cylinder 2 which results from the start of combustion consequent to ignition by the discharge portion 39 of the spark plug 37 is also propagated rapidly to the outer-side portion of the combustion chamber 11, because of the fuel 25 which remains, and as a result the flame propagation in the combustion chamber 11 is uniformly accelerated, and the engine performance is improved.

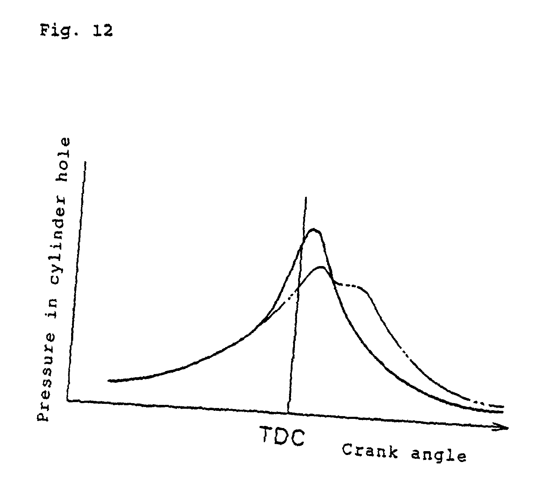

As a result of the above, in high-speed full-load operation at, eg, more than 5500 rpm, the pressure in the cylinder hole 6 at TDC rises sufficiently, as indicated by the full line in Fig. 12, whereas in the past it has not risen sufficiently, as indicated by the broken line.

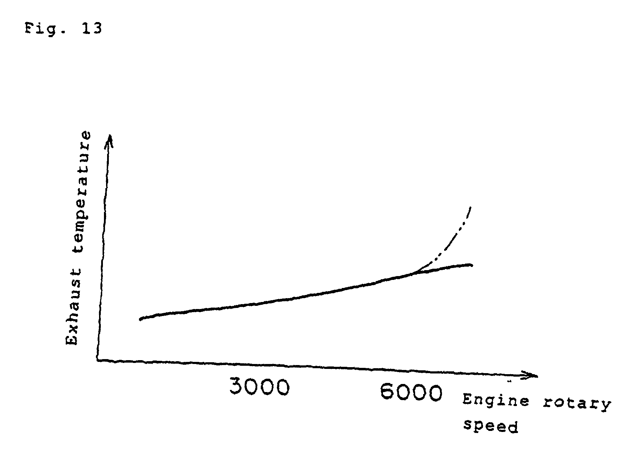

Further, as indicated by the full line in Fig. 13, a rise in the temperature of the exhaust 44 is suppressed, whereas in the past it has risen sharply, as indicated by the broken line.

On the other hand, when the speed of the engine 1 is high and the engine load is low, operating mode B is automatically selected by the abovenoted control unit's map in Fig. 10.

This operating mode B is the same as in the case in which the engine 1 is operated in the operating mode A described above.

When the speed of the engine 1 is low and the engine load is low, operating mode C is automatically selected by the control unit's map in Fig. 10.

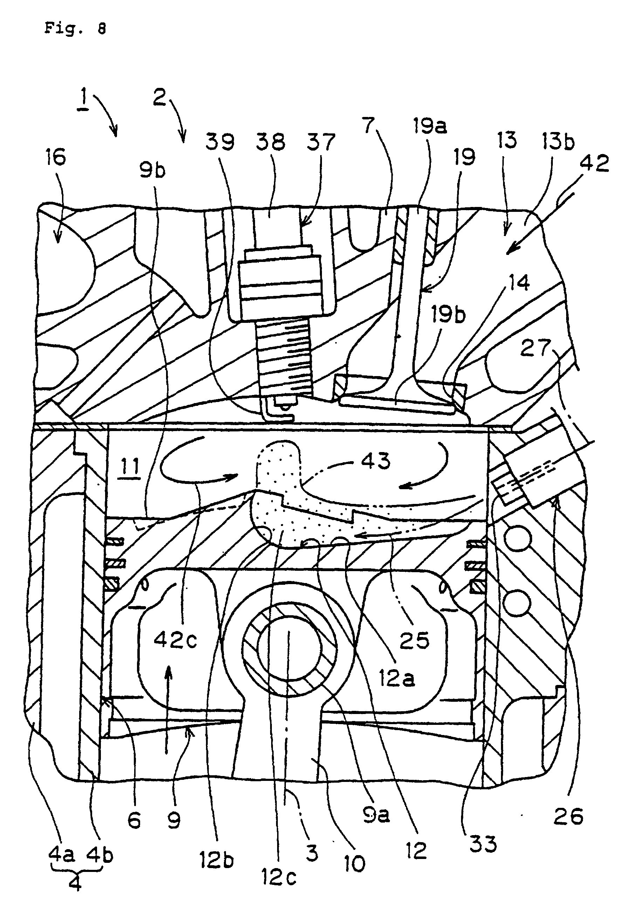

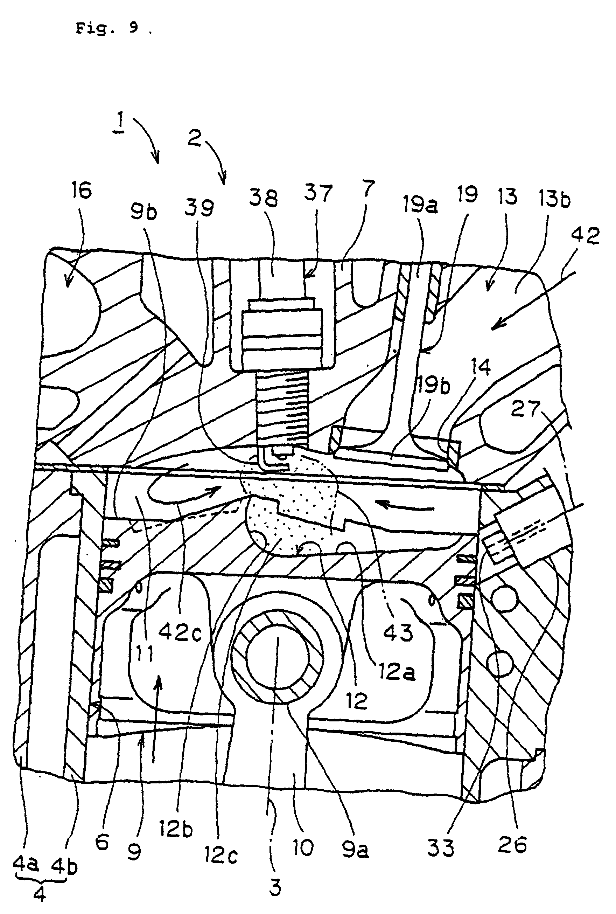

In Figs. 8 and 9, the arrangement in operating mode C is that fuel 25 is injected by the fuel injection valve 26 when the piston 9 rises in the compression stroke of the engine 1. This injection of fuel 25 is timed to take place at a crank angle of 60 - 90° before compression TDC.

In this case, since, as described above, the intake valves 19 and exhaust valves 21, as well as the spark plug 37, are in approximately perpendicular attitudes, the angle θ of inclination of the fuel injection valve 26 to the axis 3 of the cylinder 2 is made small and there is no interference with the above parts.

Therefore, when fuel 25 is injected by the fuel injection valve 26 in the compression stroke in which the piston 9 rises, since the angle of incidence of the injected fuel 25 on the top surface 9b of the piston 9 on impact of the fuel 25 against the top surface 9b of the piston 9 is large, the fuel 25 is strongly reflected upward following the impact against the top surface 9b, ie, it is moved smoothly toward the discharge portion 39 of the spark plug 37, so improving the ignitability and hence the engine performance.

Further, since, as described above, the discharge portion 39 is close to the cylinder main body 4 and cylinder head 7 connection portion, and is positioned lower than in the past, the air-fuel mixture 43 which rises as the result of being pushed upward by the top surface 9b of the piston 9 is easily captured, and so the ignitability is improved still more (Fig. 9).

The fuel injection valve 26 is mounted in the cylinder main body 4 in a manner such that the end portion thereof where the fuel injection nozzle 33 is present is located in the upper portion of the cylinder main body 4. The angle θ of inclination of the axis 27 of the fuel injection valve 26 relative to an imaginary horizontal plane is made 30 - 45°, so as to cause the fuel injection nozzle 33 to open facing obliquely downward in the combustion chamber 11.

Therefore, in the case where fuel 25 is injected by the fuel injection valve 26 in the compression stroke in which the piston 9 rises, the angle of incidence, on the top surface 9b of the piston 9, of the injected fuel 25 when it strikes the top surface 9b of the piston 9 is made larger to a certain degree.

Consequently, following impact against the top surface 9b, fuel 25 is reflected strongly upward, ie, it is directed more smoothly towards the discharge portion 39 of the spark plug 37, the ignitability is improved, and as a result the engine performance is improved.

Further, the fact that the fuel injection valve 26 is mounted in the cylinder main body 4 in the configuration described above is also advantageous in cases in which it is difficult to ensure space for mounting the fuel injection valve 26 in the cylinder head 7, such as in cases in which plural intake valves 19 and plural exhaust valves 21 are mounted in the cylinder head 7.

As described above, a depression 12 which opens toward the combustion chamber 11 is formed in a portion of the top surface 9b of the piston 9, and the inner surface of this depression 12 is made such that fuel 25 injected from the fuel injection valve 26 is guided toward the discharge portion 39.

Therefore, particularly in the compression stroke in which the piston 9 rises, when fuel 25 is injected by the fuel injection valve 26, the injected fuel 25 first enters into the interior of the depression 12 and then it is guided by the inner surface of the depression 12 toward the discharge portion 39.

Consequently, the injected fuel 25 is directed in a surer manner to the discharge portion 39, the ignitability is further improved, and there is further improvement of the engine performance.

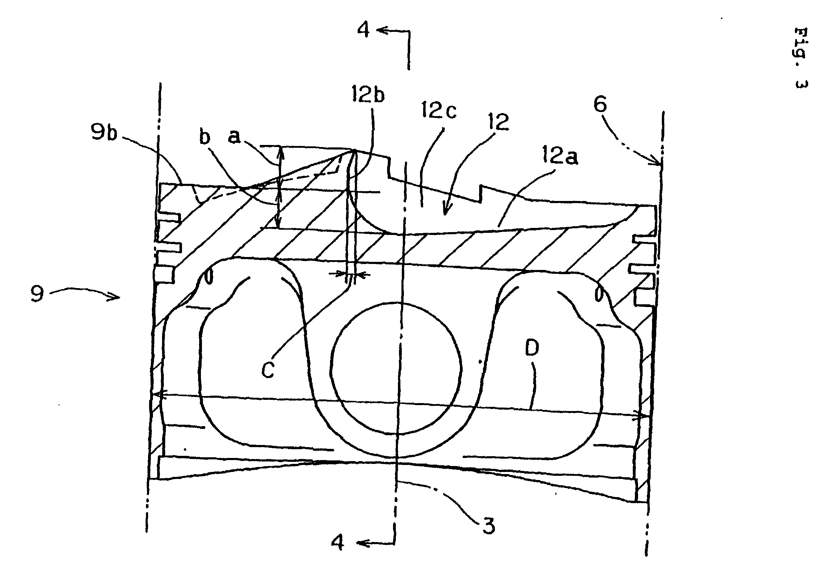

As described above with reference to Figs. 3 - 5, within the peripheral wall of the inner surface of the depression 12, the portion which faces the fuel injection nozzle 33 in the horizontal direction is made a vertical wall 12b, and an intermediate portion, in the upward-downward direction, of this vertical wall 12b is made an arcuate recess surface which, going horizontally, is more recessed in the forward direction than the top portion of the vertical wall.

Therefore, particularly in the compression stroke in which the piston 9 rises, when fuel 25 is injected by the fuel injection valve 26, even if the angle θ of inclination of the fuel injection valve 26 relative to an imaginary horizontal plane is small, fuel 25 injected from the fuel injection valve 26 is guided in a sure manner towards the discharge portion 39 by the depression 12.

Consequently, injected fuel 25 is directed still more surely toward the discharge portion 39, and there is still surer improvement of the ignitability and of the engine performance.

At the time when injected fuel 25 is guided by the depression 12 toward the discharge portion 39 in the manner described above, the side walls 12c prevent fuel 25 which has entered into the depression 12 from being dispersed in the left and right directions, and as a result the fuel 25 is directed in a still surer manner toward the discharge portion 39.

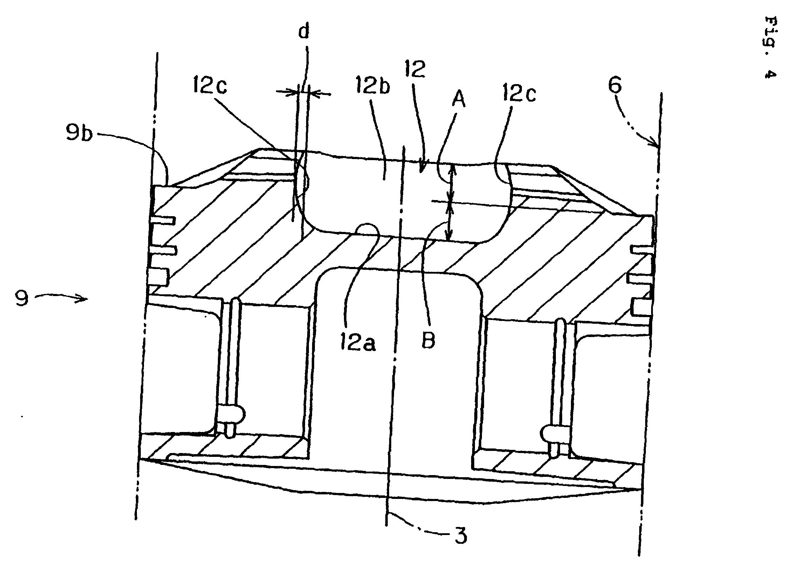

In Figs. 3 and 4, the height a of the vertical wall 12b above the general plane of the top surface 9b of the piston 9 is made 6 - 9% of the bore diameter D. If it is less than 6% of this diameter, the fuel spray produced when injected fuel 25 strikes the interior of the depression 12 can easily go over the vertical wall 12b and be dispersed, and it is not possible to force it satisfactorily into the depression 12.

The height b of the vertical wall 12b below the general plane of the top surface 9b of the piston 9 is made 7 - 12% of the bore diameter D. If it exceeds 12% of this diameter, the abovenoted spray goes completely into the interior of the depression 12, and it becomes difficult to reflect it to the discharge portion 39 of the spark plug 37.

The depth c of the bottom portion seen looking from the top of the vertical wall 12b is 1 - 2% of the bore diameter D. If it exceeds 2% of this diameter, spray gathers in the portion at the bottom of the vertical wall 12b, so resulting in new formation of spray with a large particle diameter, and this hinders combustion and leads to HC exhaust and sooty exhaust.

The effects when the piston 9 reaches top dead center are the same as those described above with reference to Figs. 6 and 7.

### (2nd form of practice)

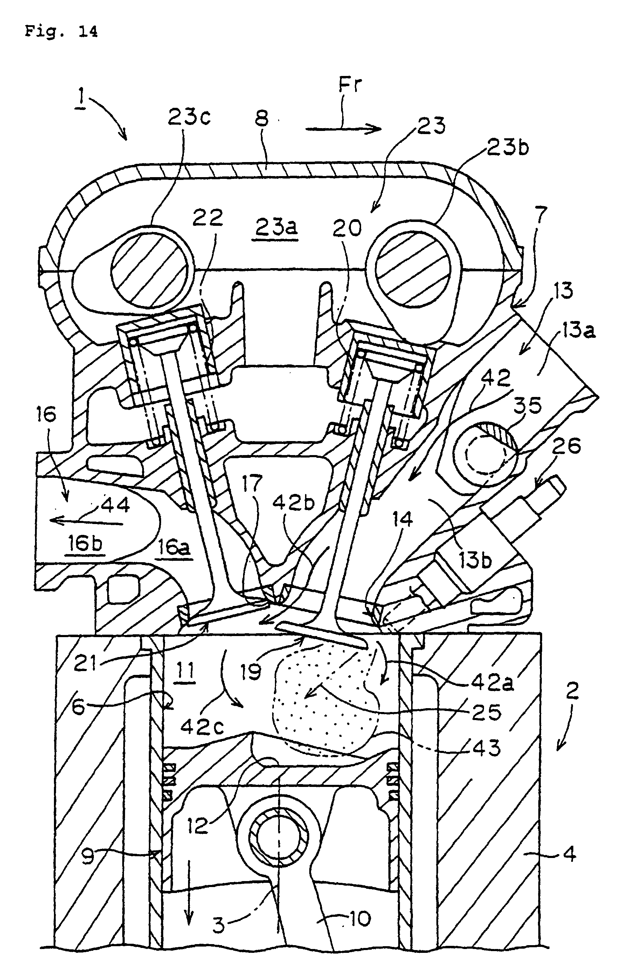

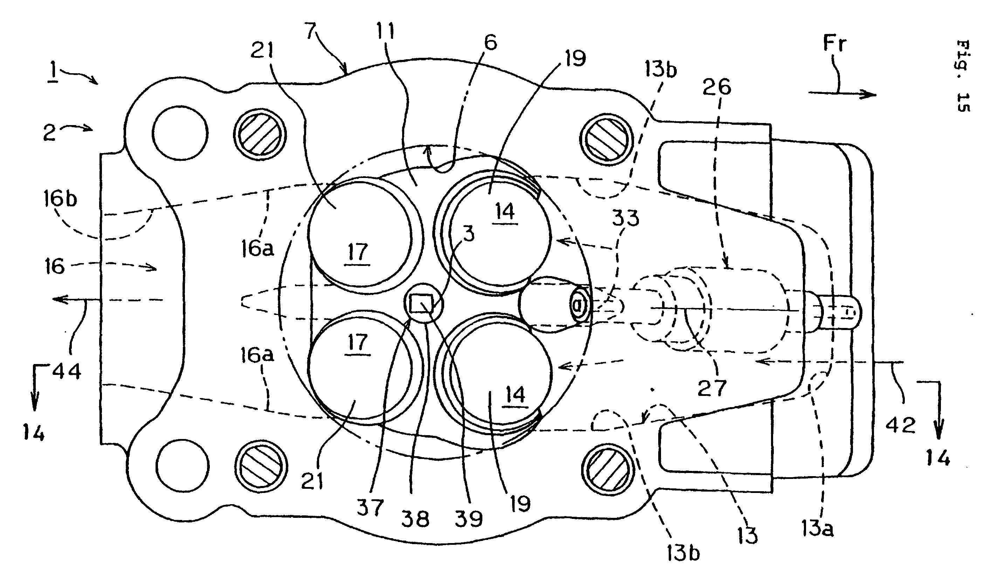

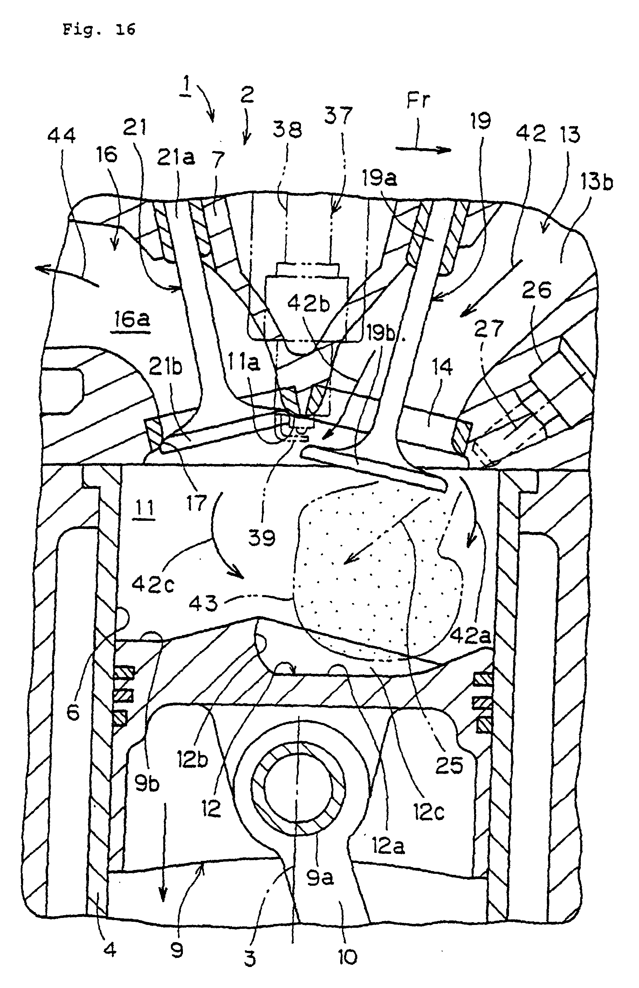

Figs. 14 - 19 show a 2nd form of practice. This form of practice has many points in common with the abovedescribed 1st form of practice in respect of the structure and effects. Therefore, a description will be given mainly with reference to the points of difference, and, for the common aspects, indications by the same symbols will be given in the drawings, and a repeated description will be omitted.

In Fig. 14, there is provided an intake control valve 35 which can open and close the lower portion in the main passage 13a in the intake passage 13, and the arrangement is that this intake control valve 35 is caused to perform valve opening and closing operations by an actuator such as a servo motor, etc.

In Figs. 14 - 16, when the engine 1 is operated under the control of the abovedescribed operating mode A, the intake control valve 35 is caused to perform a valve opening operation, as indicated specifically by the chain-dot line in Fig. 14. Therefore, the cross-sectional area of the intake passage 13 is increased and, in the intake stroke, a large amount of air 42 is drawn smoothly into the cylinder hole 6 via the intake passage 13, and fuel 25 is injected by the fuel injection valve 26.

On the other hand, when the engine 1 is operated under the control of the abovedescribed operating mode B, the intake control valve 35 is caused to perform a valve closing operation, as indicated specifically by the full line in Fig. 14. Therefore, air 42 which passes through the intake passage 13 bypasses the intake control valve 35 and flows strongly along the inner surface of the upper part in the intake passage 13. Also, fuel 25 is injected by the fuel injection valve 26 at this time. Therefore, in this operating mode B, while the amount of air 42 which flows through the intake passage 13 is less, the amount of air in the 2nd branch stream 42b becomes greater compared to the amount in the 1st branch stream 42a, and, as in operating mode A, the inverted flow 42c acts as a strong tumble flow.

The other effects are the same as in the case of the abovedescribed operation of the engine 1 in operating mode A.

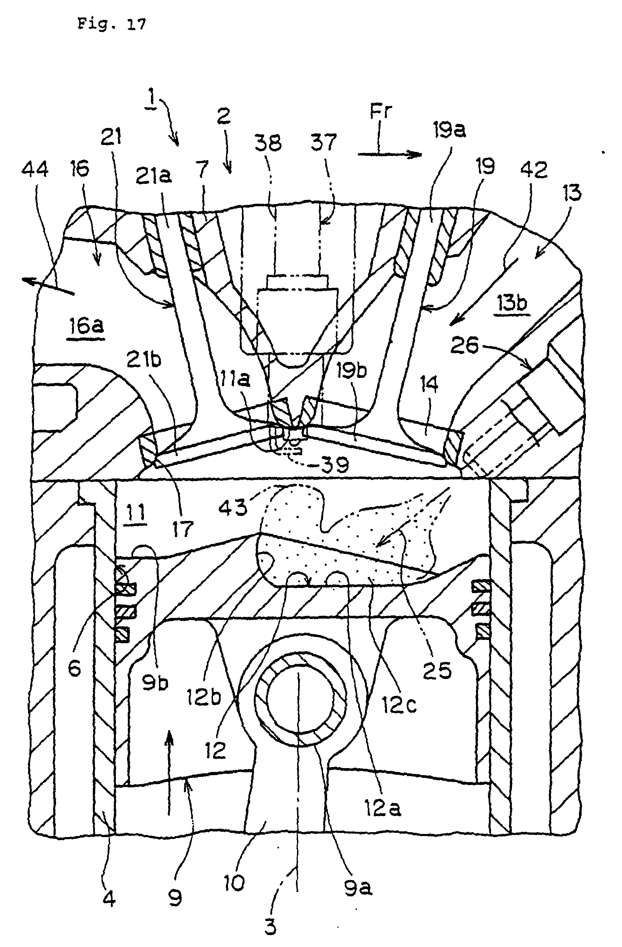

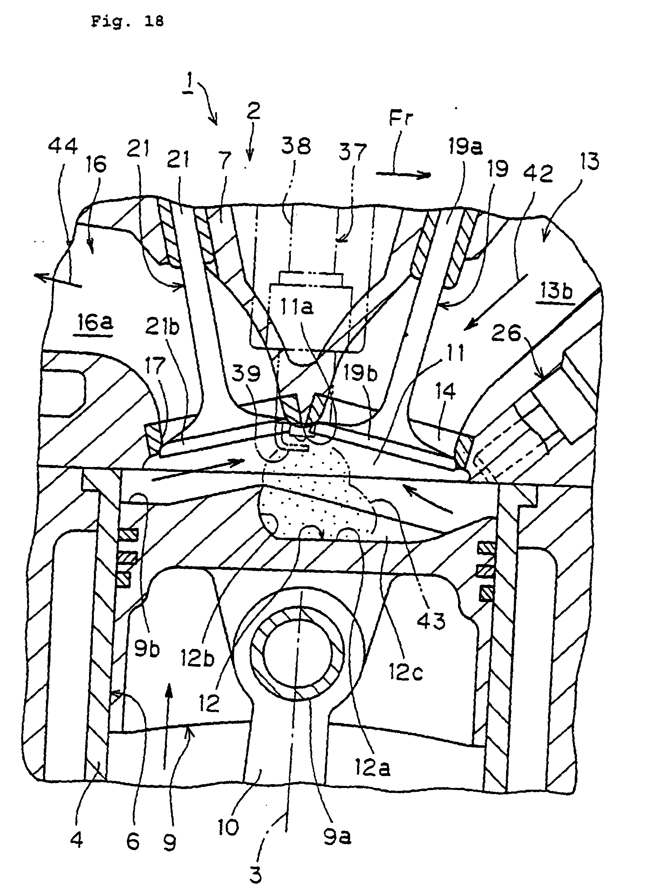

In Figs. 17 and 18, when the engine 1 is operated under the control of the abovedescribed operating mode C, the intake control valve 35 is caused to perform a valve closing operation, as indicated by the full line in Fig. 14. Therefore, in this operating mode C, while the amount of air which flows through the intake passage 13 is further reduced, air 42 which passes through the intake passage 13 bypasses the intake control valve 35 and flows strongly along the inner surface of the upper part in the intake passage 13. Therefore, the amount of air in the 2nd branch stream 42b becomes greater compared to the amount in the 1st branch stream 42a, and, as in operating mode A, the inverted flow 42c acts as a strong tumble flow.

Further, in this case, since, as described above, the amount of air 42 is small, the tumble flow described above results in the production of stratified combustion.

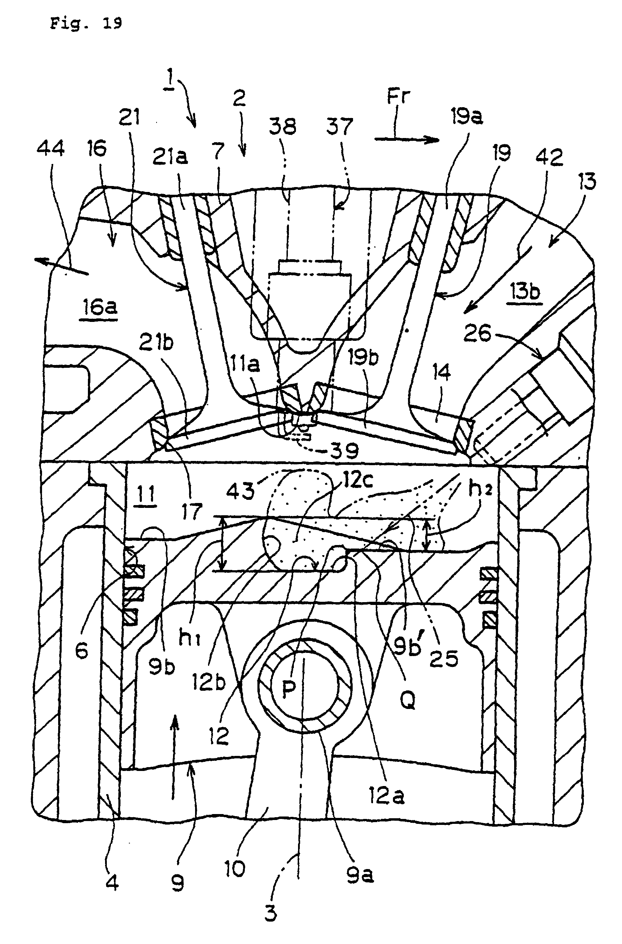

Fig. 19 shows a modification of the piston 9 in this 2nd form of practice.

In the top surface 9b' of the portion (the front portion) which, within the top surface 9b of the piston 9, surrounds the depression 12 when seen in a plane view is extended to a point where its leading edge P on the depression 12 side is close to the axis 3 of the cylinder 2. When fuel 25 is injected by the fuel injection valve 26 at a crank angle for the piston 9 of 60 - 90° before top dead center (BTDC), the center of the injected fuel 25 intersects with the top surface 9b' at an intersection point Q. In more detail, the leading edge P of the top surface 9b' is located nearer to the axis 3 than is the intersection point Q.

Further, in the depression 12, the height h₂ from the top surface 9b' to the top edge of the vertical wall 12b is about 50% of the height h₁ (equivalent to a+b of Fig. 3 in the 1st form of practice) from the bottom surface 12a to the top edge of the vertical wall 12b.

With this structure, in the compression stroke, if fuel 25 is injected by the fuel injection valve 26 at the crank angle noted above when the pressure of the atmosphere in the combustion chamber 11 is about 3 bar or more, this fuel 25 first strikes the top surface 9b' and is directed toward the vertical wall 12b and then it is guided by the vertical wall 12b and directed toward the discharge portion 39. In other words, a rich air-fuel mixture 43 is directed toward the discharge portion 39.

In the case described above, once the top surface 9b' has been struck, most of the rich air-fuel mixture 43 is forced into the depression 12, but a layer of a lean air-fuel mixture 43 is present between the bottom surface 12a and the vertical wall 12b, and so the rich air-fuel mixture 43 is prevented from striking the bottom surface 12a or vertical wall 12b directly.

Therefore, the formation of large-particle liquid drops on the surfaces of the bottom surface 12a and the vertical wall 12b by fuel 25 is suppressed more than is the case in which fuel 25 strikes the bottom surface 12a or vertical wall 12b directly.

Consequently, the engine performance is improved, since there is thorough promotion of atomization of injected fuel 25, the production of unburned substances is prevented and there is faster flame propagation, etc.

## Claims

1. Direct injection type internal combustion engine comprising:
a cylinder main body (4) having at least one cylinder hole (6) for receiving a piston (9), respectively, for reciprocating along a cylinder axis (3) in accordance with an exhaust stroke, an intake stroke, a compression stroke and a power stroke,
a cylinder head (7) installed on the cylinder main body for closing an upper end of said at least one cylinder hole (6), wherein a combustion chamber (11) is formed between each piston (9) and a lower side of the cylinder head (7), respectively,
a fuel injection valve (26) for injecting fuel into said combustion chamber (11), a spark plug (37) having a discharge portion (39) extending into the combustion chamber, wherein the discharge portion (39) is arranged close to or on said cylinder axis (3) and close or In a joining plane of said cylinder head (7) and said cylinder main body (4),
an engine control unit for controlling the fuel injection valve (26) for injecting fuel into said combustion chamber (11) in accordance with engine speed and engine load, wherein under low engine speed and low engine load (C) fuel injection of the fuel injection valve (26) begins within the compression stroke of the piston (9) and under high engine load and high or low engine speed (A) and under low engine load and high engine speed (B) fuel injection of the fuel injection valve (26) begins within the intake stroke of the piston (9).

2. Direct injection type internal combustion engine according to claim 1, wherein the spark plug (37) extends substantially parallel to said cylinder axis (3).

3. Direct injection type internal combustion engine according to claim 1 or 2, wherein the fuel injection valve (26) is mounted in a manner such that the angle of inclination of the longitudinal axis of said fuel injection valve (26) to said joining plane is 30-45° with a fuel injection nozzle (33) at an end portion of said fuel injection valve facing obliquely downward towards said combustion chamber.

4. Direct injection type internal combustion engine according to claim 3, wherein said fuel injection valve (26) is mounted on said cylinder main body (4) with one end portion thereof located close to the upper end portion of the corresponding cylinder hole (6).

5. Direct injection type internal combustion engine according to claim 3, wherein said fuel injection valve (26) is mounted on said cylinder head (7).

6. Direct injection type internal combustion engine according to one of claims 1 to 5, wherein a depression (12) which opens towards the combustion chamber (11) is formed in a portion of the top surface of said piston (12), and wherein said depression (12) is shaped in a manner such that its inner surface guides fuel, that has been injected, from said fuel injection valve (26) towards said discharge portion (39).

7. Direct injection type internal combustion engine according to one of claims 1 to 6, wherein a portion which, within a peripheral wall of a depression (12) formed in the top face of the piston (9), faces said fuel injection valve (26) in a horizontal direction is made a vertical wall (12b), and an intermediate portion of said vertical wall (12b) in the upward/downward direction is made an arcuate recess surface which is more recessed in the horizontal direction than its top portion.

8. Direct injection type internal combustion engine according to claim 6 or 7, wherein said combustion chamber (11) is made such that when the piston (9) reaches the top dead center position, at least the lower end of said discharge portion (39) of the spark plug (37) enters into the depression (12).

9. Direct injection type internal combustion engine according to one of claims 1 to 8, wherein at top dead center position of the piston (9) the width dimension (L₂) between the piston (9) and the cylinder head (7) in said combustion chamber (11) at the side which is at an outer edge radially apart from said cylinder axis (3) is larger than the width dimension (L₁) between the piston (9) and the cylinder head (7) next to said cylinder axis (3).

## Patentansprüche

1. Brennkraftmaschine vom Direkteinspritzungstyp, mit:
einem Zylinderhauptkörper (4), der zumindest eine Zylinderbohrung (6) zum Aufnehmen eines Kolbens (9) hat, um entlang einer Zylinderachse (3) in Übereinstimmung mit jeweils einem Auslasshub, einem Einlasshub, einem Verdichtungshub und einem Arbeitshub hin- und herzugehen,
einem Zylinderkopf (7), installiert auf dem Zylinderhauptkörper, um ein oberes Ende der zumindest einen Zylinderbohrung (6) zu verschließen, wobei jeweils eine Brennkammer (11) zwischen jedem Kolben (9) und der Unterseite des Zylinderkopfes (7) gebildet ist,
einem Kraftstoffeinspritzventil (26), um Kraftstoff in die Brennkammer (11) einzuspritzen,
einer Zündkerze (37), die einen Entladungsabschnitt (39) hat, der sich in die Brennkammer erstreckt, wobei der Entladungsabschnitt (39) nahe zu oder auf der Zylinderachse (3) angeordnet und nahe oder in einer Verbindungsebene des Zylinderkopfes (7) und des Zylinderhauptkörpers (4) ist,
einer Motorsteuereinheit zum Steuern des Kraftstoffeinspritzventiles (26), um Kraftstoff in die Brennkammer (11) in Übereinstimmung mit der Motordrehzahl und der Motorbelastung einzuspritzen, wobei unter niedriger Motordrehzahl und niedriger Motorbelastung (C ) die Kraftstoffeinspritzung des Kraftstoffeinspritzventiles (26) innerhalb des Verdichtungshubes des Kolbens (9) beginnt und unter hoher Motorbelastung und hoher oder niedriger Motordrehzahl (A) und niedriger Motorbelastung und hoher Motordrehzahl (B) die Kraftstoffeinspritzung des Kraftstoffeinspritzventiles (26) innerhalb des Einlasshubes des Kolbens (9) beginnt.

2. Brennkraftmaschine vom Direkteinspritzungstyp nach Anspruch 1, wobei sich die Zündkerze (37) im wesentlichen parallel zu der Zylinderachse (3) erstreckt.

3. Brennkraftmaschine vom Direkteinspritzungstyp nach Anspruch 1 oder 2, wobei das Kraftstoffeinspritzventil (26) so montiert ist, dass der Neigungswinkel der Längsachse des Kraftstoffeinspritzventiles (26) zu der Verbindungsebene 30 - 45° mit einer Kraftstoffeinspritzdüse (33) an einem Endabschnitt des Kraftstoffeinspritzventiles schräg nach unten in Richtung auf die Brennkammer zugewandt ist.

4. Brennkraftmaschine vom Direkteinspritzungstyp nach Anspruch 3, wobei das Kraftstoffeinspritzventil (26) an dem Zylinderhauptkörper (4) montiert ist, mit einem Endabschnitt desselben nah zu dem oberen Endabschnitt der entsprechenden Zylinderbohrung (6).

5. Brennkraftmaschine vom Direkteinspritzungstyp nach Anspruch 3, wobei das Kraftstoffeinspritzventil (26) an dem Zylinderkopf (7) montiert ist.

6. Brennkraftmaschine vom Direkteinspritzungstyp nach einem der Ansprüche 1 bis 5, wobei eine Vertiefung (12), die sich in Richtung der Brennkammer (11) öffnet, in einem Abschnitt der obersten Oberfläche des Kolbens (12) gebildet ist, und wobei die Vertiefung (12) in einer derartigen Weise geformt ist, dass ihre innere Oberfläche Kraftstoff, der eingespritzt worden ist, von dem Kraftstoffeinspritzventil (26) in Richtung des Entladungsabschnittes (39) führt.

7. Brennkraftmaschine vom Direkteinspritzungstyp nach einem der Ansprüche 1 bis 6, wobei ein Abschnitt, der innerhalb einer Umfangswand einer in der obersten Oberfläche des Kolbens (9) gebildeten Vertiefung (12) vorgesehen und dem Kraftstoffeinspritzventil (26) in einer horizontalen Richtung zugewandt ist, eine vertikale Wand (12b) bildet, und ein Zwischenabschnitt der vertikalen Wand (12b) in der stromaufseitigen / stromabseitigen Richtung aus einer bogenförmigen Ausnehmungsfläche gemacht ist, die in der horizontalen Richtung mehr ausgenommen ist, als ihr oberster Abschnitt.

8. Brennkraftmaschine vom Direkteinspritzungstyp nach Anspruch 6 oder 7, wobei die Brennkammer (11) derart gemacht ist, dass wenn der Kolben (9) die obere Totpunktposition erreicht, zumindest das untere Ende des Entladungsabschnittes (39) der Zündkerze (37) in die Vertiefung (12) eintritt.

9. Brennkraftmaschine vom Direkteinspritzungstyp nach einem der Ansprüche 1 bis 8, wobei in der oberen Totpunktposition des Kolbens (9) die Breitenabmessung (L₂) zwischen dem Kolben (9) und dem Zylinderkopf (7) in der Brennkammer (11) an der Seite, die an einer äußeren Kante radial von der Zylinderachse (3) getrennt ist, größer ist, als die Breitenabmessung (L₁) zwischen dem Kolben (9) und dem Zylinderkopf (7), nächst der Zylinderachse (3).

## Revendications

1. Moteur à combustion interne de type à injection directe comprenant :
un corps de cylindre principal (4) ayant au moins un orifice de cylindre (6) adapté pour recevoir un piston (9), respectivement, de manière à ce qu'il puisse effectuer un mouvement de va-et-vient le long d'un axe de cylindre (3) selon une course d'échappement, une course d'admission, une course de compression et une course de détente ;
une culasse (7) installée sur le corps de cylindre principal de manière à fermer une extrémité supérieure dudit au moins un orifice de cylindre (6), dans laquelle une chambre de combustion (11) est formée entre chaque piston (9) et un côté inférieur de la culasse (7), respectivement ;
une soupape d'injection de carburant (26) adaptée pour injecter du carburant dans ladite chambre de combustion (11), une bougie (37) ayant une portion de décharge (39) s'étendant dans la chambre de combustion dans laquelle la portion de décharge (39) est placée près de ou sur ledit axe de cylindre (3) et près de ou sur un plan de jonction de ladite culasse (7) et dudit corps de cylindre principal (4) ;
un dispositif de régulation du moteur adapté pour réguler la soupape d'injection de carburant (26) de manière à ce qu'elle injecte du carburant dans ladite chambre de combustion (11) selon le régime du moteur et la charge sur le moteur, dans lequel, dans des conditions de régime de ralenti du moteur et de charge peu élevée sur le moteur (C), l'injection de carburant par la soupape d'injection de carburant (26) débute pendant la course de compression du piston (9) et dans lequel, dans des conditions de charge élevée sur le moteur et de régime de ralenti ou maxi du moteur (A), et dans des conditions de charge peu élevée sur le moteur et de régime maxi du moteur (B), l'injection de carburant par la soupape d'injection de carburant (26) débute pendant la course d'admission du piston (9).

2. Moteur à combustion interne de type à injection directe selon la revendication 1, dans lequel la bougie (37) s'étend sensiblement parallèlement au dit axe de cylindre (3).

3. Moteur à combustion interne de type à injection directe selon la revendication 1 ou 2, dans lequel la soupape d'injection de carburant (26) est montée de telle manière que l'angle d'inclinaison de l'axe longitudinal de ladite soupape d'injection de carburant (26) par rapport au dit plan de jonction, est compris entre 30 et 45°, avec un injecteur de carburant (33) monté au niveau d'une portion d'extrémité de ladite soupape d'injection de carburant qui fait face obliquement vers le bas en direction de ladite chambre de combustion.

4. Moteur à combustion interne de type à injection directe selon la revendication 3, dans lequel ladite soupape d'injection de carburant (26) est montée sur ledit corps de cylindre principal (4) avec une portion d'extrémité de celui-ci situé près de la portion d'extrémité supérieure de l'orifice de cylindre (6) correspondant.

5. Moteur à combustion interne de type à injection directe selon la revendication 3, dans lequel ladite soupape d'injection de carburant (26) est montée sur ladite culasse (7).

6. Moteur à combustion interne de type à injection directe selon l'une quelconque des revendications 1 à 5, dans lequel un creux (12) qui ouvre en direction de la chambre de combustion (11) est formé dans une portion de la surface supérieure dudit piston (12), et dans lequel ledit creux (12) se présente sous une forme telle que sa surface intérieure guide le carburant qui a été injecté, depuis ladite soupape d'injection de carburant (26) vers ladite portion de décharge (39).

7. Moteur à combustion interne de type à injection directe selon l'une quelconque des revendications 1 à 6, dans lequel une portion qui, à l'intérieur d'une paroi périphérique d'un creux (12) formé dans la face supérieure du piston (9) fait face à ladite soupape d'injection de carburant (26) dans une direction horizontale, constitue une paroi verticale (12b), et une portion intermédiaire de ladite paroi verticale (12b) dans une direction ascendante / descendante, constitue une surface d'évidement courbée qui se trouve être plus en renfoncement dans le sens horizontal que sa partie supérieure.

8. Moteur à combustion interne de type à injection directe selon la revendication 6 ou 7, dans lequel ladite chambre de combustion (11) est constituée de telle sorte que lorsque le piston (9) atteint la position de point mort haut, au moins l'extrémité inférieure de ladite portion de décharge (39) de la bougie (37) pénètre dans le creux (12).

9. Moteur à combustion interne de type à injection directe selon l'une quelconque des revendications 1 à 8, dans lequel lorsque le piston (9) se trouve à la position de point mort haut, la dimension en largeur (L₂) entre le piston (9) et la culasse (7) dans ladite chambre de combustion (11) au niveau du côté qui se trouve à un bord extérieur radialement éloigné dudit axe de cylindre (3), est plus importante que la dimension en largeur (L₁) entre le piston (9) et la culasse (7) à proximité dudit axe de cylindre (3).
